# EUROPEAN PATENT SPECIFICATION

(11) **EP 3 789 660 B1**
(45) Date of publication and mention of the grant of the patent: **26.10.2022**
(21) Application number: 19195625.9
(22) Date of filing: 05.09.2019
(51) Int. Cl.: F21S 43/14, F21S 43/20, F21S 43/40, F21S 41/143, F21S 41/26, F21S 41/20, F21S 41/32, F21S 41/663, B60Q 1/00

(54) **MULTI-SEGMENT VEHICLE TURNING LIGHT LAMP**
MEHRSEGMENTIGE FAHRZEUGABBIEGELAMPE
LAMPE D'ÉCLAIRAGE EN VIRAGE POUR VÉHICULE À SEGMENTS MULTIPLES

(43) Date of publication of application: 10.03.2021
(73) Proprietor: T.Y.C. Brother Industrial Co., Ltd., Tainan City 70248 (TW)
(72) Inventor: SHIH, Ming-Chih, 70248 Tainan City (TW)
(74) Representative: Hübner, Gerd

(56) References cited:
- EP-A1- 3 418 626
- WO-A1-2019/029977
- US-A1- 2011 038 168
- US-A1- 2011 260 616

## Description

The present invention relates to a light lamp for a vehicle, more particularly to a multi-segment vehicle turning light lamp which is configured for multi-segmented illumination and can be used in vehicles with three or more wheels.

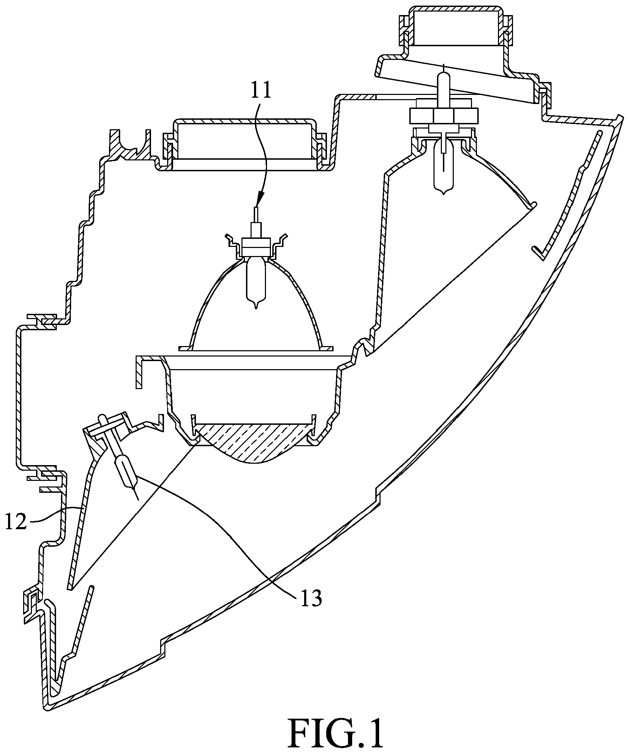

Referring to Figure 1, a conventional turning light lamp is mounted on the outer side of a headlight 11 which acts as a main illumination source of a vehicle and which has an optical axis extending in a front-rear direction. The conventional turning light lamp includes a curved reflector 12, and a halogen bulb 13 disposed with respect to the reflector 12. Such a turning light lamp can provide illumination in addition to the illumination provided by the headlight 11 while the vehicle is turning, such that the vehicle turning safety can be enhanced. However, the above-mentioned turning light lamp is bulky and provides only single-segment lighting.

US 2011/038168 A1, WO 2019/029977 A1, WO 2019/029977 A1, and US 2011/260616 A1 disclose conventional vehicle lamps.

Therefore, the object of the present invention is to provide a multi-segment vehicle turning light lamp to overcome at least one disadvantage of the prior art.

The present invention provides a multi-segment turning light lamp for a vehicle, as defined in claim 1. According to the invention, the multi-segment vehicle turning light lamp includes a lamp housing assembly and a lighting assembly.

The lamp housing assembly includes a substrate having a plane surface, a lens disposed in front of the substrate and having a concave inner surface that faces the substrate, and a light divider arrangement disposed between the substrate and the lens. The light divider arrangement includes a plurality of partitions that are angularly arranged with respect to and that extend radially with respect to a center of curvature of the concave inner surface of the lens and that extend radially to said lens. The plurality of partitions, the substrate and the lens cooperate to define a plurality of light-exit channels. The lighting assembly includes a plurality of light-emitting elements disposed on the plane surface of the substrate. Each of the light-emitting elements is disposed for emitting light through a respective one of the light-exit channels. Other features and advantages of the invention will become apparent in the following detailed description of the embodiment with reference to the accompanying drawings, of which:
Figure 1 is a cross-sectional view of a conventional turning light lamp;
Figure 2 is an exploded perspective view of an embodiment of a multi-segment vehicle turning light lamp according to the present invention;
Figure 3 is an assembled cross-sectional view illustrating the embodiment;
Figure 4 is a front view of the embodiment, the angle of vision is toward a lens of the embodiment;
Figure 5 is a representation of an optical shape while a first light-emitting element of the embodiment projects light;
Figure 6 is a representation of an optical shape while the first light-emitting element and a second light-emitting element project light; and
Figure 7 is a representation of an optical shape while the first and second light-emitting elements and a third light-emitting element project light.

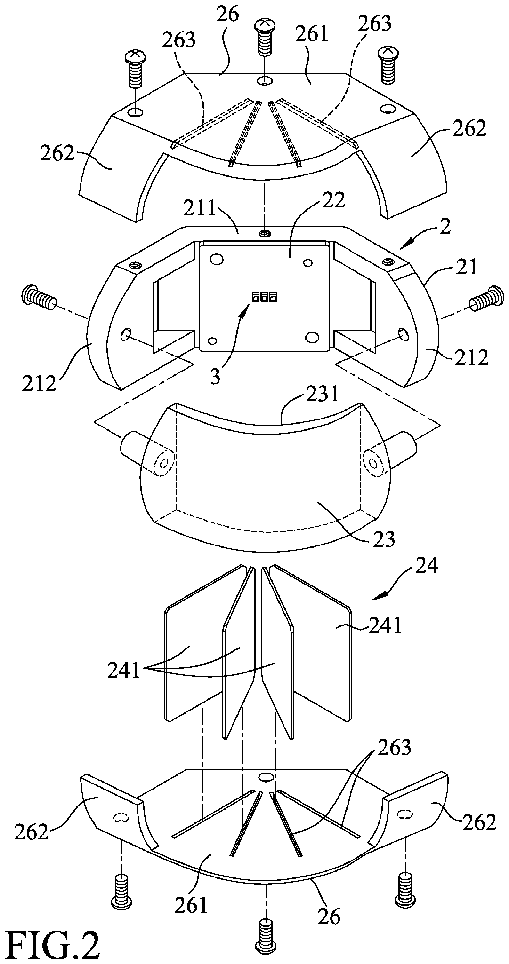

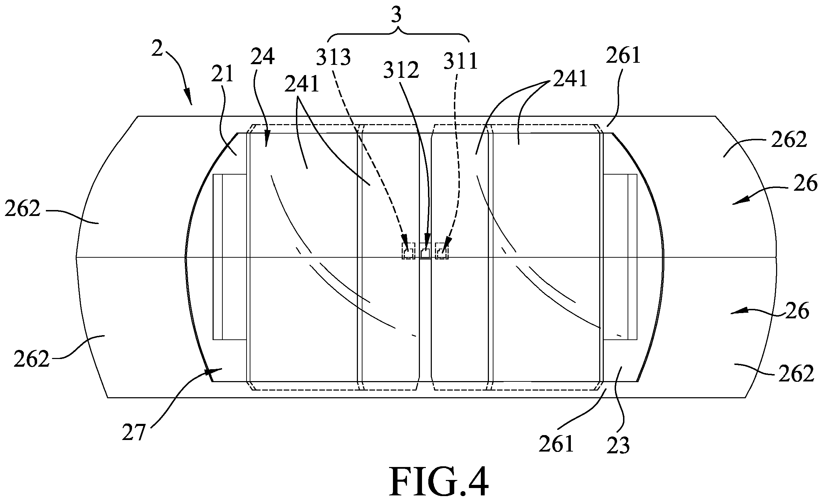

As shown in Figures 2 to 4, an embodiment of the multi-segment turning light lamp according to the present invention can be mounted by the side of a headlight (not shown) of a vehicle. The headlight emits light along an optical axis extending in a front-rear direction (D1) .

The multi-segment turning light lamp includes a lamp housing assembly 2 and a lighting assembly 3.

The lamp housing assembly 2 includes a substantially U-shaped lamp holder 21, a substrate 22 fixed on the lamp holder 21, a lens 23 disposed in front of and spaced from the substrate 22, a light divider arrangement 24 provided between the substrate 22 and the lens 23, and upper and lower lamp shells 26 disposed respectively on upper and lower sides of the substrate 22, the lens 23 and the light divider arrangement 24. The substrate 22 has a plane surface. A direction (D2) normal to the plane surface of the substrate 22 is inclined to the front-rear direction (D1).

The lamp holder 21 includes a base portion 211 which is perpendicular to the direction (D2) which is normal to the plane surface of the substrate 22, and a pair of side wing portions 212 extending respectively from opposite ends of the base portion 211.

An angle (A1) included between the direction (D2) and the front-rear direction (D1) is 45 degrees. The substrate 22 is of a rectangular shape and is fixed on the base portion 211 of the lamp holder 21.

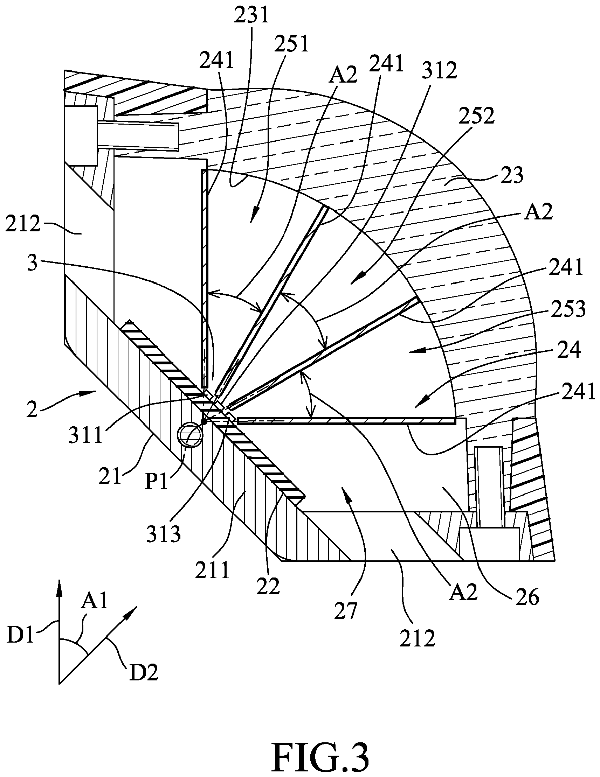

Referring to Figures 2 and 3, the lens 23 is disposed in front of the light divider arrangement 24, and includes a concave inner surface 231 facing the plane surface of the substrate 22. The arc length in a cross-section of the concave inner surface 231 is a quarter of circle, and the center of curvature of the concave inner surface 231 is designated as a reference point (P1).

The light divider arrangement 24 includes a plurality of partitions 241 that are angularly arranged with respect to the reference point (P1) and that extend radially to the lens 23. Each partition 241 is a reflector of substantial rectangular shape for reflecting light. The partitions 241, the substrate 22 and the lens 23 cooperate to define a plurality of substantially fan-shaped light-exit channels behind the lens 23 (i.e., the lens 23 is disposed in front of the light-exit channels). In this embodiment, the light-exit channels as seen in Figure 3 has, from left to right, a first light-exit channel 251, a second light-exit channel 252, and a third light-exit channel 253. Each of the first, second, and third light-exit channels 251, 252, 253 has the same central angle (A2) . The central angle (A2) of each of the first, second and third light-exit channels 251, 252, 253 is substantially 30 degrees.

The upper and lower lamp shells 26 cooperate with the lamp holder 21 to define a housing space 27 into which the substrate 22, the light-divider arrangement 24 and the lighting assembly 3 are received. Each of the upper and lower lamp shells 26 has a substantially fan-shaped base 261 and a pair of tabs 262. The bases 261 of the upper and lower lamp shells 26 cover respectively upper and lower sides of the housing space 27 (i.e., cover respectively upper and lower sides of the substrate 22, the lens 23 and the light divider arrangement 24) . The base 261 of the upper lamp shell 26 is formed with a plurality of slots 263 retaining respectively upper end portions of the partitions 241, and the base 261 of the lower lamp shell 26 is formed with a plurality of slots 263 retaining respectively lower end portions of the partitions 241, such that the partitions 241 are held in place. The pair of tabs 262 of each of the upper and lower lamp shells 26 extend respectively from opposite ends of a front edge of the base 261 toward the other one of the upper and lower lamp shells 26. The tabs 262 of the upper and lower lamp shells 26 wrap around front ends of the side wing portions 212 of the lamp holder 21.

The lighting assembly 3 includes a plurality of light-emitting elements, which are horizontally laid on the plane surface of the substrate 22 at intervals. In this embodiment, the light-emitting elements include a first light-emitting element 311, a second light emitting element 312, and a third light-emitting element 313 that are disposed for emitting light through a respective one of the first, second and third light-exit channels 251, 252, 253.

Each of the first, second and third light-emitting elements 311, 312, 313 is a light emitting diode (LED) chip, and is of rectangular shape with four sides extending in a horizontal direction or a vertical direction. Specifically, each of the first, second and third light-emitting elements 311, 312, 313, has two opposite sides extending in the horizontal direction, and another two opposite sides extending in the vertical direction. In this embodiment, each of the first, second and third light-emitting elements 311, 312, 313 is a square LED chip. An optical axis of each of the first, second and third light-emitting elements 311, 312, 313 extends in the direction (D2) which is normal to the plane surface of substrate 22, that is, the light-emitting elements 311, 312, 313 can project light forward in the direction (D2).

Referring to Figures 3 and 5 to 7, the multi-segment vehicle turning light lamp according to the invention can provide multi-segmented illumination with different illumination ranges depending on the steering angle of the vehicle while turning.

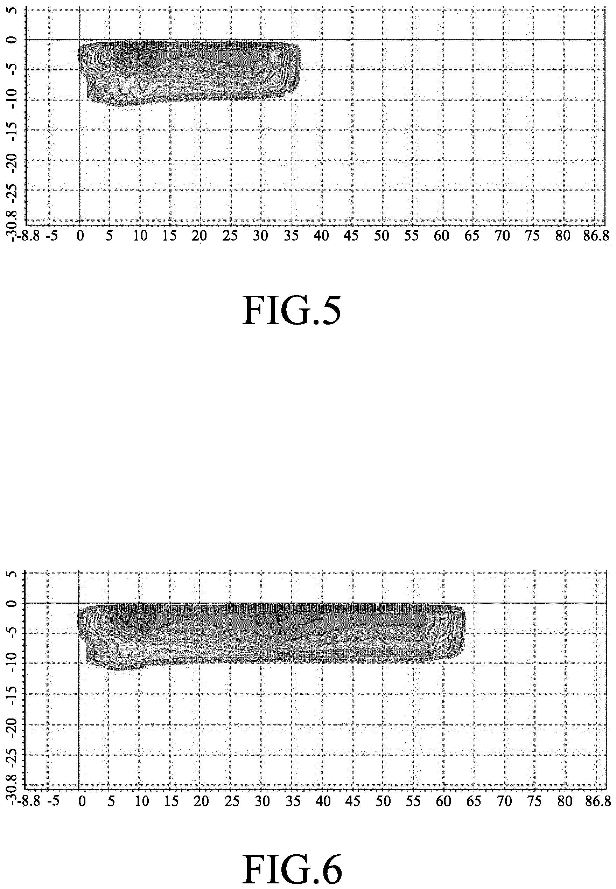

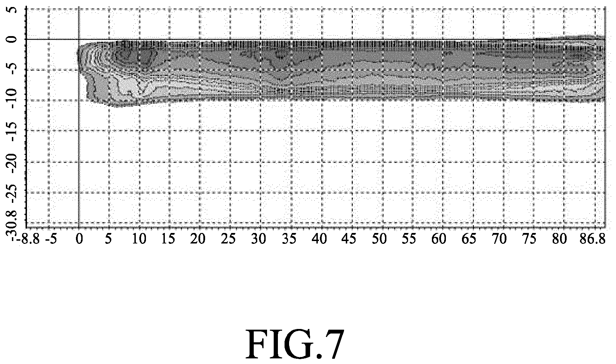

In the event of a small steering angle of the vehicle while turning, the first light emitting element 311 will emit and project light forward in the direction (D2), but the second light emitting element 312 and the third light emitting element 313 do not emit light. At this time, the multi-segment vehicle turning light lamp produces an optical shape as shown in Figure 5. In the event of a medium steering angle of the vehicle while turning, the first light-emitting element 311 and the second light-emitting element 312 both emit and project light forward in the direction (D2), but the third light-emitting element 313 does not emit light. At this time, the multi-segment vehicle turning light lamp generates an optical shape as shown in Figure 6. In the event of a large steering angle of the vehicle while turning, the first light-emitting element 311, the second light-emitting element 312 and the third light emitting element 313 will emit light together to generate an optical shape as shown in Figure 7.

The partitions 241, the substrate 22 and the lens 23 cooperate to define the first light-exit channel 251, the second light-exit channel 252 and the third light-exit channel 253, through this arrangement, the light beams of the first light emitting element 311, the second light emitting element 312 and the third light emitting element 313 can be controlled separately, so as to achieve the multi-segmented illumination as shown in Figures 5 to 7. Each of the partitions 241 has a reflection surface for reflecting light emitted from a respective one of the first, second and third light-emitting elements 311, 312, 313, so that the multi-segment turning light possesses better light extraction efficiency compared with the partitions with black light-absorbing surfaces.

In this embodiment, the configuration that the central angle (A2) of each of the first light-exit channel 251, the second light-exit channel 252 and the third light-exit channel 253 is substantially 30 degrees provides a distinct visual effect in the change of optical shape, thus creating a sense of style and technology.

In addition, since the first, second and third light-emitting elements 311, 312, 313 are horizontally spaced with four sides of each of the first, second and third light-emitting members 311, 312, 313 extending in the horizontal direction or the vertical direction, the first, second and third light-emitting elements 311, 312, 313 generate light beams parallel to the road surface and being more adaptive to the lighting of the road surface, thereby further enhance the road safety. The first, second and third light-emitting elements 311, 312, 313 integrated on the substrate 22 are cooperated with the construction of radially disposed partitions 241 to provide a simplified overall design of the multi-segment vehicle turning light lamp.

In summary, the effect of the multi-segment vehicle turning light lamp of the present invention resides in that, the first, second and third light-emitting elements 311, 312, 313 are integrated on the substrate 22 and cooperate with the first, second and third light-exit channels 251, 252, 253 defined between the partitions 241 to enable multi-segmented illumination, and the overall design is concise.

## Claims

1. A multi-segment turning light lamp for a vehicle, comprising:
a lamp housing assembly (2) including a substrate (22) that has a plane surface, a lens (23) disposed in front of said substrate (22) and having a concave inner surface (231) that faces said substrate (22), and a light divider arrangement (24) disposed between said substrate (22) and said lens (23), **characterised by** said light divider arrangement (24) including a plurality of partitions (241) that are angularly arranged with respect to and that extend radially with respect to a center of curvature (P1) of said concave inner surface (231) of said lens (23) and that extend radially to said lens (23), said plurality of partitions (241), said substrate (22) and said lens (23) cooperating to define a plurality of light-exit channels (251,252,253); and
a lighting assembly (3) including a plurality of light-emitting elements (311,312,313) that are disposed on said plane surface of said substrate (22), each of said light-emitting elements (311,312,313) being disposed for emitting light through a respective one of said light-exit channels (251,252,253).

2. The multi-segment turning light lamp as claimed in Claim 1, **characterized in that** each of said light-exit channels (251,252,253) is of substantial fan-shape, said lamp housing assembly (2) further including upper and lower lamp shells (26) that cover respectively upper and lower sides of said substrate (22), said lens (23) and said light divider arrangement (24).

3. The multi-segment turning light lamp as claimed in Claim 1, **characterized in that** each of said light-exit channels (251,252,253) is of substantial fan-shape, said lens (23) being disposed in front of said plurality of light-exit channels (251,252,253).

4. The multi-segment turning light lamp as claimed in Claim 1, **characterized in that** each of said light-exit channels (251,252,253) is of substantial fan-shape, and each of said light-exit channels (251,252,253) has the same central angle.

5. The multi-segment turning light lamp as claimed in Claim 4, **characterized in that** the central angle of each light-exit channel (251,252,253) is substantially 30 degrees.

6. The multi-segment turning light lamp as claimed in any one of Claims 1 to 5, **characterized in that** each of said light-emitting elements (311,312,313) is of rectangular shape with four sides extending in a horizontal direction or a vertical direction.

7. The multi-segment turning light lamp as claimed in Claim 6, **characterized in that** each of said light-emitting elements (311,312,313) is a light emitting diode chip.

8. The multi-segment turning light lamp as claimed in any one of Claims 6 and 7, **characterized in that** an optical axis of each of said light-emitting elements (311,312,313) extends in a direction normal to said plane surface of said substrate.

9. The multi-segment turning light lamp as claimed in any one of the previous Claims, **characterized in that** each of said partitions (241) includes a reflection surface for reflecting light emitted from a respective one of said light-emitting elements (311, 312, 313).

## Patentansprüche

1. Mehrsegment-Abbiegelichtleuchte für ein Fahrzeug, umfassend:
- eine Leuchtengehäuseanordnung (2) mit einem Substrat (22), das eine ebene Oberfläche aufweist, einer Linse (23), die vor dem Substrat (22) angeordnet ist und eine konkave Innenfläche (231) aufweist, die dem Substrat (22) zugewandt ist, und einer Lichtteileranordnung (24), die zwischen dem Substrat (22) und der Linse (23) angeordnet ist,
**dadurch gekennzeichnet, dass**
die Lichtteileranordnung (24) eine Vielzahl von Trennwänden (241) umfasst, die in Bezug auf einen Krümmungsmittelpunkt (P1) der konkaven Innenfläche (231) der Linse (23) winklig angeordnet sind und sich in radialer Richtung zu diesem erstrecken, und die sich radial zu der Linse (23) erstrecken, wobei die Vielzahl von Trennwänden (241), das Substrat (22) und die Linse (23) zusammenwirken, um eine Vielzahl von Lichtaustrittskanälen (251, 252, 253) zu definieren; und
- eine Beleuchtungsanordnung (3) mit einer Vielzahl von lichtemittierenden Elementen (311, 312, 313), die auf der ebenen Oberfläche des Substrats (22) angeordnet sind, wobei jedes der lichtemittierenden Elemente (311, 312, 313) zum Emittieren von Licht durch einen entsprechenden der Lichtaustrittskanäle (251, 252, 253) angeordnet ist.

2. Mehrsegment-Abbiegelichtleuchte nach Anspruch 1,
**dadurch gekennzeichnet, dass**
jeder der Lichtaustrittskanäle (251, 252, 253) im Wesentlichen fächerförmig ist, wobei die Leuchtengehäuseanordnung (2) ferner eine obere und eine untere Leuchtenschale (26) umfasst, die die Ober- bzw. Unterseite des Substrats (22), die Linse (23) und die Lichtteileranordnung (24) abdecken.

3. Mehrsegment-Abbiegelichtleuchte nach Anspruch 1,
**dadurch gekennzeichnet, dass**
jeder der Lichtaustrittskanäle (251, 252, 253) im Wesentlichen fächerförmig ist, wobei die Linse (23) vor der Vielzahl von Lichtaustrittskanälen (251, 252, 253) angeordnet ist.

4. Mehrsegment-Abbiegelichtleuchte nach Anspruch 1,
**dadurch gekennzeichnet, dass**
jeder der Lichtaustrittskanäle (251, 252, 253) im Wesentlichen fächerförmig ist und jeder der Lichtaustrittskanäle (251, 252, 253) denselben zentralen Winkel aufweist.

5. Mehrsegment-Abbiegelichtleuchte nach Anspruch 4,
**dadurch gekennzeichnet, dass**
der zentrale Winkel jedes Lichtaustrittskanals (251, 252, 253) im Wesentlichen 30 Grad beträgt.

6. Mehrsegment-Abbiegelichtleuchte nach einem der Ansprüche 1 bis 5, **dadurch gekennzeichnet, dass**
jedes der lichtemittierenden Elemente (311, 312, 313) eine rechteckige Form mit vier in horizontaler oder vertikaler Richtung verlaufenden Seiten aufweist.

7. Mehrsegment-Abbiegelichtleuchte nach Anspruch 6,
**dadurch gekennzeichnet, dass**
jedes der lichtemittierenden Elemente (311, 312, 313) ein lichtemittierender Diodenchip ist.

8. Mehrsegment-Abbiegelichtleuchte nach einem der Ansprüche 6 und 7, **dadurch gekennzeichnet, dass**
eine optische Achse jedes der lichtemittierenden Elemente (311, 312, 313) sich in einer Richtung senkrecht zu der ebenen Oberfläche des Substrats erstreckt.

9. Mehrsegment-Abbiegelichtleuchte nach einem der vorhergehenden Ansprüche,
**dadurch gekennzeichnet, dass**
jede der Trennwände (241) eine Reflexionsfläche zum Reflektieren des von einem jeweiligen der lichtemittierenden Elemente (311, 312, 313) emittierten Lichts aufweist.

## Revendications

1. Lampe d'éclairage en virage multi-segment pour un véhicule, comprenant :
- un ensemble de boîtier de lampe (2) comprenant un substrat (22) qui a une surface plane, une lentille (23) disposée devant ledit substrat (22) et ayant une surface interne concave (231) qui fait face audit substrat (22), et un agencement de diviseur de lumière (24) disposé entre ledit substrat (22) et ladite lentille (23),
**caractérisé en ce**
**que** ledit agencement de diviseur de lumière (24) comprend une pluralité de cloisons (241) qui sont disposées angulairement par rapport à un centre de courbure (P1) de ladite surface interne concave (231) de ladite lentille (23) et qui s'étendent radialement par rapport à celui-ci, et qui s'étendent radialement par rapport à ladite lentille (23), ladite pluralité de cloisons (241), ledit substrat (22) et ladite lentille (23) coopérant pour définir une pluralité de canaux de sortie de lumière (251, 252, 253) ; et
- un ensemble d'éclairage (3) comprenant une pluralité d'éléments émetteurs de lumière (311, 312, 313) qui sont disposés sur ladite surface plane dudit substrat (22), chacun desdits éléments émetteurs de lumière (311, 312, 313) étant disposé pour émettre de la lumière à travers un canal respectif desdits canaux de sortie de lumière (251, 252, 253).

2. Lampe d'éclairage en virage multi-segment selon la revendication 1,
**caractérisée en ce**
**que** chacun desdits canaux de sortie de lumière (251, 252, 253) est sensiblement en forme d'éventail, ledit ensemble de boîtier de lampe (2) comprenant en outre des coquilles de lampe supérieure et inférieure (26) qui couvrent respectivement les côtés supérieur et inférieur dudit substrat (22), de ladite lentille (23) et dudit agencement de diviseur de lumière (24).

3. Lampe d'éclairage en virage multi-segment selon la revendication 1,
**caractérisée en ce**
**que** chacun desdits canaux de sortie de lumière (251, 252, 253) a sensiblement la forme d'un éventail, ladite lentille (23) étant disposée en face de ladite pluralité de canaux de sortie de lumière (251, 252, 253).

4. Lampe d'éclairage en virage multi-segment selon la revendication 1,
**caractérisée en ce**
**que** chacun desdits canaux de sortie de lumière (251, 252, 253) est sensiblement en forme d'éventail, et chacun desdits canaux de sortie de lumière (251, 252, 253) a le même angle central.

5. Lampe d'éclairage en virage multi-segment selon la revendication 4,
**caractérisé en ce**
**que** l'angle central de chaque canal de sortie de lumière (251, 252, 253) est sensiblement de 30 degrés.

6. Lampe d'éclairage en virage multi-segment selon l'une quelconque des revendications 1 à 5,
**caractérisée en ce**
**que** chacun desdits éléments émetteurs de lumière (311, 312, 313) est de forme rectangulaire avec quatre côtés s'étendant dans une direction horizontale ou une direction verticale.

7. Lampe d'éclairage en virage multi-segment selon la revendication 6,
**caractérisée en ce**
**que** chacun desdits éléments émetteurs de lumière (311, 312, 313) est une puce de diode électroluminescente.

8. Lampe d'éclairage en virage multi-segment selon l'une quelconque des revendications 6 et 7,
**caractérisée en ce**
**qu**'un axe optique de chacun desdits éléments émetteurs de lumière (311, 312, 313) s'étend dans une direction normale à ladite surface plane dudit substrat.

9. Lampe d'éclairage en virage multi-segment selon l'une quelconque des revendications précédentes,
**caractérisée en ce**
**que** chacune desdites cloisons (241) comprend une surface de réflexion pour réfléchir la lumière émise par l'un respectif desdits éléments émetteurs de lumière (311, 312, 313).
